(19) Europäisches Patentamt / European Patent Office / Office européen des brevets

(11) **EP 1 764 600 A1**

(12) **EUROPÄISCHE PATENTANMELDUNG**

(43) Veröffentlichungstag:
**21.03.2007 Patentblatt 2007/12**

(51) Int Cl.:
***G01M 1/22*** *(2006.01)*

(21) Anmeldenummer: 06019334.9

(22) Anmeldetag: **15.09.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **15.09.2005 DE 102005044190**

(71) Anmelder: **Schenck RoTec GmbH**
**64293 Darmstadt (DE)**

(72) Erfinder:
• **Rogalla, Martin**
**64297 Darmstadt (DE)**
• **Buschbeck, Andreas**
**64404 Bickenbach (DE)**

(74) Vertreter: **Behrens, Helmut**
**Gross-Gerauer Weg 55**
**64295 Darmstadt (DE)**

(54) **Verfahren und Einrichtung zur Verringerung von Störeinflüssen bei Unwuchtmessungen von Rotoren**

(57) Die Erfindung bezieht sich auf ein Verfahren zur Verringerung von Störeinflüssen bei Unwuchtmessungen von Rotoren (5), bei dem der Rotor rotierbar in einem schwingfähig gegen Stützbereiche einer Einrichtung (1) zur Bestimmung der Unwucht abgestützten Lagerbauteil gelagert wird, bei dem unwuchtinduzierte und störeinflussinduzierte Schwingbewegungeh des Lagerbauteils (3) relativ zur Einrichtung mittels zumindest eines Aufnehmers (6) in ein Meßsignal umgesetzt werden, bei dem störeinflussinduzierte Absolutbewegungen der Einrichtung zur Bestimmung der Unwucht mittels zumindest eines weiteren Aufnehmers (7) in zumindest ein weiteres Meßsignal umgesetzt werden und bei dem ein Korrektursignal dem Meßsignal überlagert wird.

Zur Verbesserung der Genauigkeit der Unwuchtbestimmung ist vorgesehen; dass vor einer Unwuchtmessung eine Identifzierungsmessung erfolgt, bei der in Abwesenheit unwuchtinduzierter Effekte störeinflussinduzierte Absolutbewegungen der Einrichtung (1) zur Bestimmung der Unwucht als erstes Meßsignal erfaßt werden und störeinflussinduzierte Schwingbewegungen des Lagerbauteils (3) als weiteres Meßsignal erfaßt werden. Ferner ist vorgesehen, dass beim Identifizierungsvorgang das erste Meßsignal derart beeinflußt wird, daß es im wesentlichen identisch mit dem durch die Störung hervorgerufenen weiteren Meßsignal ist und dass das derart abgeglichene erste Meßsignal bei Unwuchtmessungen als Korrektursignal dem Meßsignal überlagert wird.

Fig. 1

EP 1 764 600 A1

**Beschreibung**

Die Erfindung betrifft ein Verfahren zur Verringerung von Störeinflüssen bei Unwuchtmessungen von Rotoren nach dem Oberbegriff des Patentanspruchs 1 sowie eine Einrichtung hierzu nach dem Oberbegriff des Patentanspruchs 9.

Zur Ermittlung der Unwucht wird der mit der Unwucht behaftete Rotor in einem Lagerbauteil gelagert, das schwingfähig gegen einen raumfesten Bereich, nämlich den Rahmen einer Einrichtung zur Bestimmung der Unwucht abgestützt ist. Der Rotor wird in Rotation versetzt und die Schwingungen des Lagerbauteils relativ zum Rahmen werden mittels Aufnehmer erfaßt und zur Bestimmung der Unwucht herangezogen.

Das Lagerbauteil kann als Wuchtbrücke eines Lagerständers oder als Wuchtrahmen ausgebildet sein. Pro Auswuchtebene wird mindestens ein Aufnehmer am Lagerbauteil angeordnet. Der Aufnehmer kann zwischen Lagerbauteil und Rahmen angeordnet sein und ein Gehäuse, das am Rahmen befestigt ist und ein Sensorelement, das mit dem Lagerbauteil verbunden ist, aufweisen. Es kann auch ein Aufnehmer eingesetzt werden, dessen Gehäuse nicht mit dem Rahmen verbunden ist, wobei dann die Schwingungen des Lagerbauteils gegen eine seismische, d.h. eine weich aufgehängte relativ große Masse gemessen werden. Der Rahmen ist im Idealfall, d.h. beim Fehlen von Störeinflüssen, als Fixpunkt im Raum zu betrachten. Störschwingungen wie z. B. Erschütterungen, die sich als Vibrationen über das Fundament auf den Rahmen fortpflanzen, beeinflussen das Meßsignal der Aufnehmer und führen zur Meßunsicherheiten, da der Rahmen nicht mehr einen Fixpunkt im Raum bildet. Das Aufnehmersignal enthält dann bei Unwuchtmessungen zusätzlich zum eigentlichen Nutzsignal ein überlagertes Störsignal.

Die US-PS 3,164, 995 offenbart ein Verfahren zur Verringerung von Störeinflüssen, bei dem ein zusätzlicher Aufnehmer an der Einrichtung zur Bestimmung der Unwucht vorgesehen ist, mit dem Absolutschwingungen des Rahmens erfaßt werden. Die beiden Aufnehmer, die als Tauchspulenaufnehmer ausgebildet sind, sind koaxial hintereinander angeordnet und aneinander befestigt. Der erste Aufnehmer weist ein Sensorelement in Form der Tauchspulenstange auf, die mit dem schwingfähigen Lagerbauteil für den Rotor, der Wuchtbrücke, verbunden ist. Der zweite Aufnehmer weist eine Sensormasse auf, die auf den Aufbau der Einrichtung und den zu untersuchenden Rotor abgestimmt ist. Das vom zweiten Aufnehmer abgegebene Meßsignal ist proportional zu den Schwingungen des Rahmens und damit den Störschwingungen des Aufnehmergehäuses, und wird dem vom ersten Aufnehmer abgegebenen Signal überlagert.

Aus der US-PS 5,209,116 ist ein Verfahren zur Verringerung von Störeinflüssen bei der Unwuchtmessung bekannt, bei dem benachbart zum schwingfähigen Lagerbauteil für den Rotor eine Simulationsmasse angeordnet wird, die das gleiche Gewicht wie der zu untersuchende Rotor hat. Die Schwingungen des Lagerbauteils werden von einem ersten, zwischen diesem und dem Rahmen angeordneten Aufnehmerpaar erfaßt, während die Schwingungen der Simulationsmasse von einem zweiten, zwischen dieser und dem Rahmen angeordneten Aufnehmerpaar erfaßt werden. Das erste Aufnehmerpaar erfaßt unwuchtinduzierte und störschwingungsinduzierte Schwingungen, während das zweite Aufnehmerpaar Schwingungen zwischen der aufgrund ihrer trägen Masse stillstehenden Simulationsmasse und dem Rahmen als Störschwingungen erfaßt. Die Signale von beiden Aufnehmerpaaren werden überlagert und einer Auswertung zugeführt.

Bei beiden bekannten Verfahren ist es als nachteilig anzusehen, daß die Kompensationsbauteile auf die verwendete Einrichtung bzw. den zu untersuchenden Rotor, insbesondere seine Rotormasse abgestimmt sein müssen. Darüberhinaus werden Rahmenbewegungen nur in einem räumlichen Freiheitsgrad erfasst.

Der Erfindung liegt daher die Aufgabe zugrunde, die Berücksichtigung von Störeinflüssen bei der Messung der Unwucht von Rotoren unabhängiger von den Eigenschaften des zu untersuchenden Rotors oder der verwendeten Einrichtung zur Bestimmung der Unwucht zu machen und damit die Genauigkeit der Unwuchtbestimmung zu verbessern.

Erfindungsgemäß wird diese Aufgabe mit den Merkmalen der Patentansprüche 1 und 9 gelöst.

Die Erfindung ermöglicht vorteilhaft erstmals eine gravierende Verringerung von Störeinflüssen bei der Ermittlung der Unwucht beliebiger Rotoren, da keine gesonderten mechanischen Kompensationsbauteile erforderlich sind, die auf die verwendete Einrichtung zur Bestimmung der Unwucht bzw. auf den zu untersuchenden Rotor abgestimmt sein müssen. Mit der Erfindung können erstmals auf einfachste Weise alle räumlichen Freiheitsgrade der Rahmenbewegungen zufolge Störeinflüssen berücksichtigt werden. Eine äußerst aufwendige, praktisch nicht machbare Abstimmung von mechanischen Kompensationsbauteilen in Hinblick auf die Übereinstimmung mit dem Lagerbauteil in allen Massenträgheits-, Feder- sowie Dämpfungseigenschaften und auf die räumlichen Abmessungen ist in vorteilhafter Weise nicht erforderlich. Darüberhinaus liegt der Erfindung die Erkenntnis zugrunde, daß Störeinflüsse sich nicht nur auf das Aufnehmergehäuse fortpflanzen, sondern auch auf das Sensorelement selbst, z.B. auf die Tauchspulenstange bei einem Tauchspulenaufnehmer. Mit der Berücksichtigung dieser Erkenntnis ist eine gegenüber den bekannten Lösungen bessere Unterdrückung von Störeinflüssen gewährleistet.

Bei der Erfindung wird der Signalfluß der Meßsignalverarbeitung um einen gesonderten Zweig erweitert. In diesem gesonderten Zweig sind die Störungen bzw. die Störeinflüsse mittels zumindest eines weiteren Aufnehmers separat erfaßbar. Vor der Unwuchtmessung erfolgt eine Identifizierungsmessung, bei der der Rotor stillsteht und gezielt eine Störung auf das Rahmenfundament oder das Lagerbauteil aufgebracht und gemessen wird (Input). Eine Identifizierungsmessung kann auch mit einem perfekt ausgewuchteten rotierenden Referenzrotor erfolgen, um Störungen aufgrund von Rundlauffehlern berücksichtigen zu können. Als Output werden störeinflussinduzierte Schwingbewegungen des Lagerbauteils als Meßsignal erfaßt. Es wird eine Systemidentifikation des Übertragungsverhaltens der Einrichtung zur Ermittlung der Unwucht mittels der In- und Outputsignale vorgenommen. Mit erfolgter Identifikation können bei jeder weiteren Messung die z. B. im Rahmenfundament aufgenommenen Störungen in Größen am Aufnehmer des Lagerbauteils umgesetzt werden. Der so identifizierte störeinflussinduzierte Signalanteil wird von den gemessenen Schwingungssignalen des Aufnehmers am Lagerbauteil abgezogen und das so bereinigte Signal der Auswertung zugeführt. Der störeinflussinduzierte Signalanteil kann auch mathematisch beschrieben werden, falls ein deterministischer Zusammenhang zwischen Störung und den gemessenen Schwingungssignalen der Aufnehmer an dem Lagerbauteil besteht.

Mit der Erfindung ist in vorteilhafter Weise sichergestellt, daß alle Elemente der Einrichtung zur Bestimmung der Unwucht, die Störeinflüssen unterliegen, sowie alle Störeinflusseffekte auch Berücksichtigung finden. Neben Unwuchtkräften des Rotors, die gemäß einem definierten Übertragungsverhalten des Lagerbauteils eine Bewegung des Sensorelements, z.B. der Tauchspulenstange des zugehörigen Aufnehmers bewirken, verursachen Fundamentvibrationen ebenfalls Bewegungen der Tauchspulenstange, wobei jedoch ein unterschiedliches Übertragungsverhalten vorliegt. Auch pflanzen sich Fundamentvibrationen entsprechend dem Übertragungsverhalten der Tauchspulenaufhängung in eine Bewegung des Tauchspulengehäuses fort. Bewegungen der Tauchspulenstange aufgrund von Fundamentvibrationen werden mit der Erfindung erstmals sicher erfaßt.

Die Erfindung ermöglicht in vorteilhafter Weise mittels eines und ggf. mehrerer Aufnehmer die Berücksichtigung der unterschiedlichsten separat meßbaren Störschwingungen oder von Störungen, bei denen ein deterministischer, mathematisch beschreibbarer Zusammenhang zwischen Störung und eigentlichem Meßwert besteht. Neben Schwingungen in der Horizontalebene können dies beispielsweise Störschwingungen in Form von Drehschwingungen des Lagerbauteils, die durch Zusatzmassen verursacht werden können sein, oder Schwingungen in Längsrichtung des Rotors, die durch die Ausgestaltung des Rotorantriebs oder durch freie Massenkräfte des Rotors am Axialanschlag entstehen können. Erfasst werden können auch Schwingungen aufgrund geometrischer Abweichungen in den Antriebselementen, z.B. Rundlaufabweichungen bei Bandantrieben oder aufgrund von Rundlauffehlern des Rotors selbst.

Eine besonders vorteilhafte Weiterbildung der Erfindung sieht vor, den Identifizierungsvorgang als Parameteridentifikation durchzuführen. Bei diesem sehr einfachen Verfahren werden plausible Ansatzfunktionen gewählt und dann die freien Parameter dieser Ansätze nach einem "best-fit"-Verfahren aus tatsächlichen Meßwerten mit geeigneten Störsignalverläufen bestimmt. Dabei ist besonders vorteilhaft, daß der Identifizierungsvorgang nur einmal erforderlich ist und mittels der so identifizierten Übertragungsfunktion aus den Meßsignalen des zumindest einen Absolutbewegungen erfassenden Aufnehmers die Störanteile bestimmt sind.

Vorgenannter Vorteil gilt auch bei einer Ausgestaltung der Erfindung, bei der bei deterministischem Zusammenhang zwischen den Meßsignalen des zumindest einen, die Absolutbewegungen erfassenden Aufnehmers und den Störanteilen in den Meßsignalen vorgesehen ist, zur Ermittlung des Übertragungsverhaltens ein mechanisches Modell für die Einrichtung zur Bestimmung der Unwucht heranzuziehen.

Da das dynamische Übertragungsverhalten nicht mechanisch mittels Feder-Masse-Systemen wie bei den bekannten Lösungen nachgebildet wird, kann ein schon identifiziertes Übertragungsverhalten in vorteilhafter Weise wiederabrufbar gespeichert werden. Dadurch lassen sich unterschiedlichste Rotoren in beliebiger Abfolge durch Aufruf des zugehörigen Übertragungsverhaltens behandeln, ohne daß Anpassungen der Einrichtung zur Bestimmung der Unwucht bezüglich der Nachbildung des zugehörigen Übertragungsverhaltens erforderlich sind.

Zwecks Identifizierungsmessung können in vorteilhafter Weise unterschiedliche Störungen aufgebracht werden, beispielsweise Störimpulse oder definierte Störungen, die sich über einen bestimmten Frequenzbereich erstrecken oder Störungen in Form von Rauschen.

Weitere vorteilhafte Ausgestaltungen der Erfindung sind in den Unteransprüchen angegeben.

Ausführungsbeispiele der Erfindung sind in der Zeichnung dargestellt und werden nachfolgend näher erläutert.

Es zeigen:

Fig. 1: eine schematische Darstellung einer Einrichtung zur Bestimmung der Unwucht mit einer Einrichtung zur Verringerung von Störeinflüssen

Fig. 2: die Einrichtung nach Fig. 1 in Draufsicht

Fig. 3: eine schematische Darstellung der Signalbeeinflussung

Fig. 4 eine weitere schematische Darstellung der Signalbeeinflussung zwecks Identifizierung von Störeinflüssen

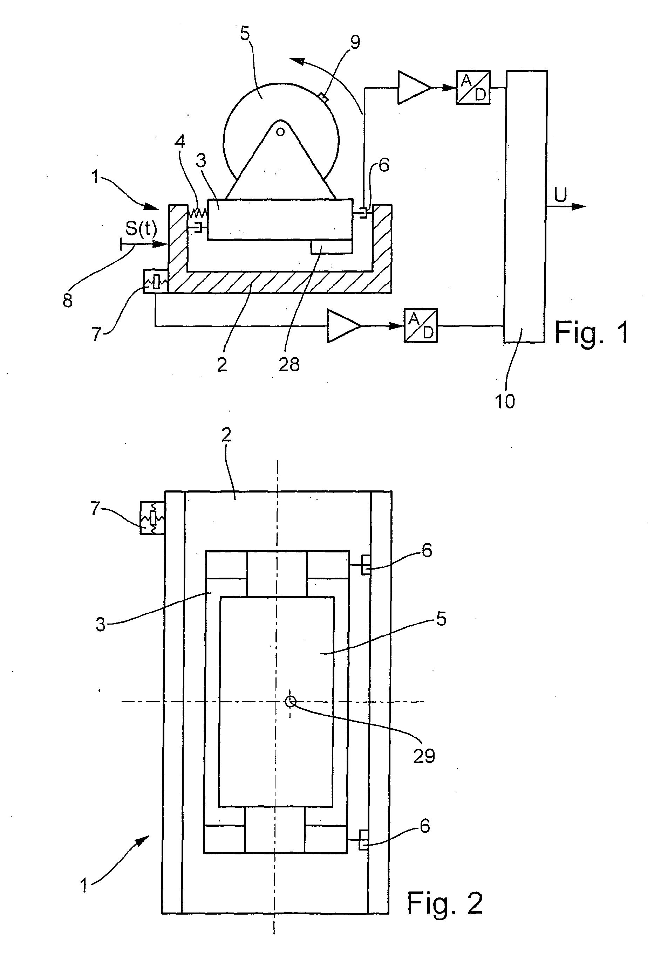

In Fig. 1 ist eine Einrichtung 1 zur Bestimmung der Unwucht schematisch dargestellt, die als herkömmliche Auswuchtmaschine ausgebildet ist. Die Auswuchtmaschine weist einen auf einem Fundament montierten Rahmen 2 auf, an dem ein als Wuchtrahmen ausgebildetes Lagerbauteil 3 schwingfähig abgestützt ist, beispielsweise über mehrere Flachfedern oder mehrere Rundstabfedern; in der Fig. 1 ist diese schwingfähige Abstützung durch das Feder/Dämpfer-Symbol 4 schematisch dargestellt. In dem Lagerbauteil 3 ist der zu untersuchende Rotor 5 rotierbar gelagert, im Beispiel in zwei Lagerebenen. Schwingbewegungen des Lagerbauteils 3 relativ zum Rahmen 2 werden über Aufnehmer 6 erfaßt, wobei in jeder Lagerebene ein Aufnehmer 6 angeordnet ist. Im Ausführungsbeispiel sind dies Tauchspulenaufnehmer, die zwischen Lagerbauteil 3 und Rahmen 2 angeordnet sind und deren Sensorelemente, die Tauchspulenstangen, mit dem Lagerbauteil 3 und deren Gehäuse mit dem Rahmen 2 verbunden sind. Es können jedoch noch weitere Aufnehmer in der jeweiligen Lagerebene vorgesehen sein; die Aufnehmer können prinzipiell als Weg-, Geschwindigkeits- oder Beschleunigungsaufnehmer ausgebildet sein. Die Meßsignale dieser Aufnehmer 6 werden zusammen mit dem Meßsignal eines hier nicht dargestellten Aufnehmers für das Drehverhalten des Rotors, der eine Rotormarkierung 9 abtastet, einer Auswertung zugeführt, die einen Meßwert für die vorhandene bzw. zu beseitigende Unwucht des Rotors 5 liefert.

Die Auswuchtmaschine ist wie aus Fig. 1 ersichtlich mit einem zusätzlichen Aufnehmer 7 versehen, der Meßsignale liefert, die zur Verringerung des Einflusses von Störgrößen und damit zur Verbesserung des Unwuchtmeßergebnisses dienen. Die Störgrößen, die z.B. über das Fundament auf den Rahmen 2 übertragen werden, sind durch den Pfeil 8 charakterisiert. Der Aufnehmer 7 ist als Beschleunigungsaufnehmer ausgebildet, der im Ausführungsbeispiel zwei orthogonal zueinander liegende Meßrichtungen hat, so daß Störauswirkungen in zumindest zwei Dimensionen erfaßt werden können. Damit lassen sich Drehschwingungen, die sich aufgrund von beispielsweise unsymmetrischen Massenverteilungen um einen aus der Symmetrieachse verschobenen Schwerpunkt einstellen, sicher erfassen. In den Fig. 1 und 2 ist dies durch eine Zusatzmasse 28, die zu Drehschwingungen um den Schwerpunkt 29 führt, dargestellt. Allgemein können mit mehrachsigen Aufnehmern oder mehreren Einzelaufnehmern Drehschwingungen um beliebige Drehachsen bzw. Drehpunkte erfaßt werden.

Die Meßsignale der beiden Aufnehmer 6 und das Meßsignal des Beschleunigungsaufnehmers werden wie auch das Meßsignal des Aufnehmers für das Drehverhalten des Rotors einer Auswerteeinheit 10 zugeführt, an deren Ausgang der Meßwert U für die Unwucht weiterverarbeitbar zum Beispiel zur Anzeige oder zur Steuerung von Unwuchtausgleichsmitteln ansteht.

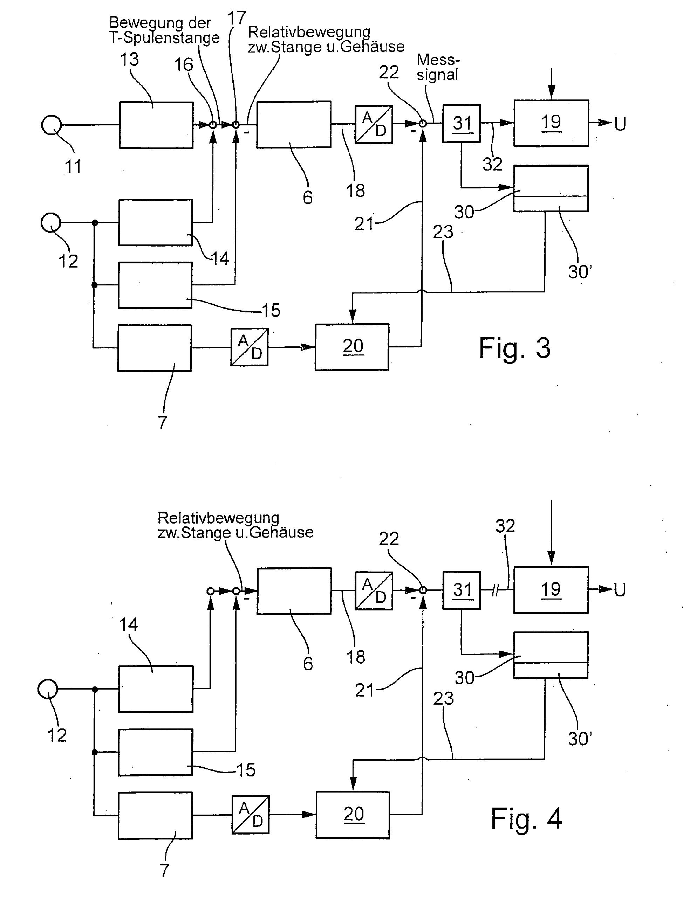

Die Beeinflussung der Meßsignale und ihre Verarbeitung in der Auswerteeinheit 10 ist aus den Fig. 3 und 4 näher sichtlich. Meßsignale werden von der Unwucht des Rotors 5 und von Störungen verursacht. In Fig. 3 wird dies durch die Bezugsziffer 11 bezüglich der Unwucht und die Bezugsziffer 12 bezüglich einer Störung schematisch angedeutet.

Das die Meßsignale beeinflussende Übertragungsverhalten der Bauteile der Auswuchtmaschine wird im Falle des Unwuchtmeßsignals durch die Bezugsziffer 13 symbolisiert, im Falle des Störsignals durch die Bezugsziffern 14 und 15.

Bei der durch die Bezugsziffer 12 gekennzeichneten Störung kann es sich einerseits im Fall des Unwuchtmeßvorgangs um eine beliebig auftretende Störung z.B. eine Fußpunkterregung am Rahmen 2, wie dies durch den Pfeil 8 in Fig. 1 angedeutet ist, handeln und andererseits im Fall der Identifizierung von Störeinflüssen in Abwesenheit unwuchtinduzierter Effekte wie nachfolgend erläutert um eine gezielt aufgebrachte Störung.

Eine beliebige Fußpunkterregung, z.B. eine Erschütterung auf den Rahmen 2 der Auswuchtmaschine, überträgt sich durch die federnde Abstützung des Lagerbauteils 3 (Bezugsziffer 4 in Fig. 1) auf die Lagerbauteilmasse und damit auf die Tauchspulenstange des Tauchspulenaufnehmers (Aufnehmer 6); das zugehörige Übertragungsverhalten zwischen Rahmen 2 und Lagerbauteil 3 ist in Fig. 3 durch die Bezugsziffer 14 symbolisiert. Andererseits wirkt sich dieselbe Fußpunkterregung mit einem anderen Übertragungsverhalten, das durch die Bezugsziffer 15 symbolisiert ist, auf das Tauchspulengehäuse aus. Die Bewegung der Tauchspulenstange aufgrund der sich überlagernden Anteile aus einem unwuchtinduzierten Bewegungsanteil und einem störeinflussinduzierten Bewegungsanteil ist mit der Bezugsziffer 16 symbolisiert. In dem Aufnehmer 6, der Tauchspule, wird die Differenz aus der Bewegung von Tauchspulenstange und Tauchspulengehäuse in ein Meßsignal 18 für die Relativbewegung zwischen Stange und Gehäuse umgesetzt, wie dies durch die Bezugsziffer 17 angedeutet ist, und nach Digitalisierung der Weiterverarbeitung zugeführt.

Das Meßsignal 18 des Aufnehmers 6 enthält dann bei der Unwuchtmessung zusätzlich zum eigentlichen Nutzsignal das überlagerte Störsignal, welches z.B durch die Fußpunkterregung hervorgerufen wurde.

Um den Einfluß von Störungen bei der Unwuchtmessung zu verringern, ist, wie oben beschrieben, mindestens ein zusätzlicher Aufnehmer 7 an der Einrichtung zur Bestimmung der Unwucht angebracht, wobei zur Verarbeitung des Meßsignals ein zusätzlicher Zweig in der Signalauswertung vorgesehen ist, wie dies im unteren Teil der Fig. 3 bzw. der Fig. 4 dargestellt ist.

Mit diesem Aufnehmer 7 wird die Störung erfasst und anschließend in einer Signalbeeinflussungseinrichtung 20 ein Korrektursignal ermittelt oder errechnet und über die Leitung 21 dem Meßsignal 18 des Aufnehmers 6 in einem Vergleicher 22 überlagert. Dabei ist das Korrektursignal im wesentlichen identisch mit dem durch die Störung verursachten Fehleranteil im Meßsignal 18 des Aufnehmers 6.

Das Korrektursignal kann mit Hilfe einer Parameteridentifikation ermittelt werden oder auch errechnet werden.

Im Grunde werden die folgenden Schritte durchgeführt:

1) Ermittlung aus dem Meßsignal des zusätzlichen Aufnehmers 7, welchen Schwingungen dieser ausgesetzt war,
2) Ermittlung, zu welchen Bewegungen des Lagerbauteils 3 diese Schwingungen geführt hätten
3) Ermittlung, zu welchen Bewegungen des Gehäuses des Aufnehmers 6 diese Schwingungen geführt hätten,
4) Ermittlung anhand der beiden letzteren Schritte, welches Ausgangssignal 18 dann von dem Aufnehmer 6 geliefert wird; dieses Ausgangssignal ist das gesuchte Korrektursignal.

Die Vorgehensweise zur Ermittlung des Korrektursignals wird anhand der Figuren 3 und 4 im folgenden näher erläutert. Die Systemidentifikation, d.h. die Identifikation des Übertragungsverhaltens der das Ausgangssignal der Unwuchtmessung beeinflussenden Bauteile der Einrichtung 1 zur Bestimmung der Unwucht soll nachfolgend anhand des Parameteridentifikationsverfahrens erläutert werden.

Hierzu wird zweckmäßigerweise das Verhalten untersucht, bei dem ausschließlich Störungen vorliegen. Diese Störungen können z. B. durch einfaches Anstoßen des Rahmens oder durch Aufbringung definierter Störgrößen (Rauschen, Grundgeräusche) hervorgerufen werden. Der Rotor 5 steht dabei still; dies ist aus Fig. 4 durch den fehlenden oberen Erregungszweig (Bezugsziffer 11 in Fig. 3 für die Erregung durch die Unwucht des Rotors) ersichtlich. Die Meßsignale der Aufnehmer 6 und 7 werden aufgezeichnet, bei einer Zwei-Ebenen-Wuchtung üblicherweise vier Signalreihen. Das bekannte Störungssignal dient als Input, die Meßsignale an den Ausgängen der Aufnehmer 6 und 7 dienen als Output. Mit diesen In- und Outputsignalen wird die Parameteridentifikation vorgenommen, die beispielsweise eine 4 x 4 Verknüpfungsmatrix liefert. Es lassen sich nun bei jeder weiteren Messung die im Rahmen 2 aufgenommenen Störungen in die an den Aufnehmern 6 des Lagerbauteils 3 anstehenden Größen umrechnen.

Allgemein läßt sich der Zusammenhang zwischen den Signalen des oder der zusätzlichen Aufnehmer 7 und den Störanteilen in den Signalen der Aufnehmer 6 wie folgt formulieren:

$$F\left(x_1, \frac{\partial x_1}{\partial t}, \frac{\partial^2 x_1}{\partial t^2}, ..., x_n, \frac{\partial x_n}{\partial t}, \frac{\partial^2 x_n}{\partial t^2}, ...\right) = G\left(u_1, \frac{\partial u_1}{\partial t}, \frac{\partial^2 u_1}{\partial t^2}, ..., u_k, \frac{\partial u_k}{\partial t}, \frac{\partial^2 u_n}{\partial t^2}, ..., h_1, \frac{\partial h_1}{\partial t}, \frac{\partial^2 h_1}{\partial t^2}, ..., h_m, \frac{\partial h_m}{\partial t}, \frac{\partial^2 h_m}{\partial t^2}, ...\right)$$

mit

| | |
|---|---|
| F, G | Ansatzfunktionen. |
| $X_1(t), ........ , X_n(t)$ | Meßsignale der Aufnehmer 6 mit Störanteil und Unwuchtanteil |
| t | Zeit |
| n | Zahl der Aufnehmer 6 |
| $U_1(t), ....., U_n(t)$ | Meßsignale der Aufnehmer 6 bei Abwesenheit von Störungen |
| $h_1(t), ......, h_m(t)$ | Meßsignale der zusätzlichen Aufnehmer 7 |
| m | Zahl der zusätzlichen Aufnehmer 7 |

Die Ansatzfunktionen F und G werden plausibel gewählt. Dabei können zusätzlich noch nichtlineare Anteile aufgenommen werden, die beispielsweise eine Abhängigkeit der Störung von der Unwucht beschreiben in der Form $u_i \cdot h_j$ samt Ableitungen die einrichtungsspezifisch sein kann. Die freien Parameter dieser Ansätze werden nach einem "best fit"-Verfahren aus tatsächlichen Meßwerten mit geeigneten Unwucht- und Störsignalverläufen bestimmt.

Der Einfachheit halber seien F und G im folgenden als lineare Funktionen angenommen; die verunreinigten Meßsignale setzen sich dann additiv zusammen aus "reinen Unwuchtanteilen" und "reinen Störanteilen"

$$x(t) = x_U(t) + x_S(t)$$

Es sollen nun ausschließlich Störungen und keine Erregung durch Unwuchten (fehlender oberer Erregungszweig in Fig. 4) vorliegen. Dann liegen direkt die Signalverläufe der Störanteile $X_{1,s}(t), ......., x_{n,s}(t)$ und die Signalverläufe der zusätzlichen Aufnehmer $h_1(t), ........ h_m(t)$ im Meßsignal vor. Das Übertragungsverhalten läßt sich dann umschreiben zu:

$$x_1,...,x_n = H(\frac{\partial x_1}{\partial t}, \frac{\partial^2 x_1}{\partial t^2},...,\frac{\partial x_n}{\partial t}, \frac{\partial^2 x_n}{\partial t^2},...,h_1, \frac{\partial h_1}{\partial t}, \frac{\partial^2 h_1}{\partial t^2},...,h_m, \frac{\partial h_m}{\partial t}, \frac{\partial^2 h_m}{\partial t^2},...)$$

Die freien Parameter der Übertragungsfunktion H für eine minimale Summe der Fehlerquadrate ("best fit") führen nun auf ein lineares Gleichungssystem:

$$\sum_i \left( x(t_i) - H(\frac{\partial x(t_i)}{\partial t}, \frac{\partial^2 x(t_i)}{\partial t^2},...,h(t_i), \frac{\partial h(t_i)}{\partial t}, \frac{\partial^2 h(t_i)}{\partial t^2}) \right)^2 \rightarrow Min$$

dessen Lösung die Verknüpfungsmatrix für das Übertragungsverhalten liefert.

In der Fig. 4 ist die Verwendung eines "best fit" Verfahrens durch die Ansteuerung einer Signalbeeinflussungseinrichtung 20 verdeutlicht. Über die Signalleitung 23 werden Stellsignale für die Einstellung von Signalbeein-flussungsfaktoren an die Signalbeeinflussungseinrichtung 20 geliefert, die abhängig sind von der Differenz der Meßsignale am Tauchspulenausgang und am Ausgang der Signalbeeinflussungseinrichtung 20. Liegt keine Differenz vor, sind die Signalbeeinflussungsfaktoren optimal eingestellt und der Störgrößeneinfluß beseitigt.

Die Signalbeeinflussungseinrichtung 20 kann als Filterbank ausgebildet sein, wobei die Signalbeeinflussungsfaktoren durch die Filtereigenschaften der einzelnen Filter realisiert sind.

Die Stellsignale werden in einer Einheit 30 generiert, der über eine Schalteinrichtung 31 das am Ausgang des Vergleichers 22 anstehende Differenzsignal zugeführt wird. Die Generierung wird durch den Verlauf des Parameteridentifikationsverfahrens gesteuert.

Solange am Ausgang des Vergleichers 22 ein Differenzsignal anliegt, unterbindet die Schalteinrichtung 31 die Weitergabe dieses Signals an die Einheit 19 zur Bestimmung der Unwucht des Rotors 5, wie dies in Fig. 4 durch die getrennte Verbindung 32 zwischen Schalteinrichtung 31 und Einheit 19 dargestellt ist.

Stellt der Vergleicher 22 keine Differenz des Meßsignals am Tauchspulenausgang und des Signals am Ausgang der Signalbeeinflussungseinrichtung 20 mehr fest, werden die Stellsignale für Signalbeeinflussungseinrichtung 20 in einem Speicherbereich 30' der Einheit 30 gespeichert; gleichzeitig schaltet die Schalteinrichtung des Ausgangssignals des Vergleichers 22 zur Einheit 19 durch und erlaubt ferner den Antrieb des Rotors 5 zwecks Unwuchtbestimmung.

Die Einheit 30 kann bei deterministischem Zusammenhang zwischen den Meßsignalen des zusätzlichen Aufnehmers 7 zur Erfassung der Störeinflüsse und den Störanteilen in den Meßsignalen der Aufnehmer 6 einen Rechner aufweisen, der anhand eines mechanischen Modells der Einrichtung zur Bestimmung der Unwucht die das Übertragungsverhalten berücksichtigenden Stellsignale generiert.

**Patentansprüche**

1. Verfahren zur Verringerung von Störeinflüssen bei Unwuchtmessungen von Rotoren,
   bei dem der Rotor rotierbar in einem schwingfähig gegen Stützbereiche einer Einrichtung zur Bestimmung der Unwucht abgestützten Lagerbauteil gelagert wird, bei dem unwuchtinduzierte und störeinflussinduzierte Schwingbewegungen des Lagerbauteils relativ zur Einrichtung mittels zumindest eines Aufnehmers in ein Meßsignal umgesetzt werden,
   bei dem störeinflussinduzierte Absolutbewegungen der Einrichtung zur Bestimmung der Unwucht mittels zumindest eines weiteren Aufnehmers in zumindest ein weiteres Meßsignal umgesetzt werden,
   und bei dem ein Korrektursignal dem Meßsignal überlagert wird,
   **dadurch gekennzeichnet, dass** vor einer Unwuchtmessung eine Identifizierungsmessung erfolgt, bei der in Abwesenheit unwuchtinduzierter Effekte störeinflussinduzierte Absolutbewegungen der Einrichtung (1) zur Bestimmung der Unwucht als erstes Meßsignal erfaßt werden und störeinflussinduzierte Schwingbewegungen des Lagerbauteils (3) als weiteres Meßsignal erfaßt werden, dass beim Identifizierungsvorgang das erste Meßsignal derart beeinflußt wird, daß es im wesentlichen identisch mit dem durch die Störung hervorgerufenen weiteren Meßsignal ist und dass das derart abgeglichene erste Meßsignal bei Unwuchtmessungen als Korrektursignal dem Meßsignal überlagert wird.

2. Verfahren nach Anspruch 1, **dadurch gekennzeichnet, dass** der Identifizierungsvorgang als Parameteridentifikation durchgeführt wird, bei der das erste Meßsignal als Input über eine das Übertragungsverhalten kennzeichnende Matrix mit dem als Output gemessenen weiteren Meßsignal verknüpft wird.

3. Verfahren nach Anspruch 1, **dadurch gekennzeichnet , dass** beim Identifizierungsvorgang zur Ermittlung des Übertragungsverhaltens ein mechanisches Modell für die Einrichtung (1) zur Bestimmung der Unwucht herangezogen wird.

4. Verfahren nach einem oder mehreren der vorhergehenden Ansprüche, **dadurch gekennzeichnet, dass** pro Auswuchtebene des Rotors (5) zumindest ein Aufnehmer (6) zur Erfassung von Schwingbewegungen des Lagerbauteils (3) und mindestens ein weiterer Aufnehmer (7) für Absolutbewegungen der Einrichtung (1) zur Bestimmung der Unwucht vorgesehen wird.

5. Verfahren nach Anspruch 4, **dadurch gekennzeichnet, dass** das Lagerbauteil (3) in Form eines Wuchtrahmens vorgesehen wird.

6. Verfahren nach Anspruch 4 oder Anspruch 5, **dadurch gekennzeichnet, dass** zur Erfassung von mehrdimensionalen Störschwingungen, insbesondere Dreh-Störschwingungen, Aufnehmer (7) für mehrere Raumrichtungen vorgesehen werden.

7. Verfahren nach einem oder mehreren der vorhergehenden Ansprüche , **dadurch gekennzeichnet, dass** bei der Identifizierungsmessung impulsartige Störungen oder sich über einen definierten Frequenzbereich erstreckende definierte Störungen aufgebracht werden.

8. Verfahren nach einem oder mehreren der vorhergehenden Ansprüche, **dadurch gekennzeichnet, dass** ein identifiziertes Übertragungsverhalten wiederabrufbar gespeichert wird.

9. Einrichtung zur Bestimmung der Unwucht eines Rotors, mit zumindest einem schwingfähig gegen Stützbereiche der Einrichtung abgestützten Lagerbauteil zur rotierbaren Lagerung des Rotors, dem zumindest ein Aufnehmer zur Erfassung unwuchtinduzierter und störeinflussinduzierter Schwingbewegungen des Lagerbauteils zugeordnet ist, mit zumindest einem weiteren, an der Einrichtung zur Bestimmung der Unwucht befestigten Aufnehmer zur Erfassung von Absolutbewegungen der Einrichtung zur Bestimmung der Unwucht und mit einem Aufnehmer zur Erfassung des Drehverhaltens des Rotors sowie einer Einheit zur Bestimmung der Unwucht, deren Eingängen die Meßsignale der Aufnehmer zugeführt werden und an deren Ausgang die Unwucht nach Betrag und Phase ansteht,
**dadurch gekennzeichnet, dass**
die Signale des zumindest einen Aufnehmers (7) für die Absolutbewegungen einer Signalbeeinflussungseinrichtung (20) zugeführt werden, die ausgangsseitig mit einem Vergleicher (22) verbunden ist, dem ferner die Signale des zumindest einen Aufnehmers (6) für die Schwingbewegungen des Lagerbauteils (3) zugeführt werden und dass das am Ausgang des Vergleichers (20) anstehende Signal über eine Schalteinrichtung (31) bei der Messung für die Identifizierung des Übertragungsverhaltens einer Einheit (30) zur Generierung eines Stellsignals zugeführt wird, das über eine Steuerleitung (23) einem Stelleingang der Signalbeeinflussungseinrichtung (20) zugeführt wird, und über die Schalteinrichtung (31) bei der Messung zur Bestimmung der Unwucht des Rotors (5) der Einheit (10) zur Unwuchtmessung zugeführt wird.

10. Einrichtung nach Anspruch 9, **dadurch gekennzeichnet, dass** nach Identifizierung des Übertragungsverhaltens das zugeordnete Stellsignal weiterverarbeitbar in einer Speichereinheit (30') abgelegt ist.

Fig. 1

Fig. 2

8

Fig. 3

Fig. 4

**Europäisches Patentamt**

**EUROPÄISCHER RECHERCHENBERICHT**

Nummer der Anmeldung

EP 06 01 9334

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 681 967 A (HINES GORDON E ET AL) 8. August 1972 (1972-08-08) * Zusammenfassung * * Spalte 2, Zeile 14 - Spalte 15, Zeile 27; Abbildungen 1-9 * ----- | 1-10 | INV. G01M1/22 |
| X | US 3 122 020 A (HEINRICH HACK) 25. Februar 1964 (1964-02-25) * Zusammenfassung * * Spalte 1, Zeile 55 - Zeile 60 * * Spalte 2, Zeile 26 - Zeile 46 * * Spalte 3, Zeile 5 - Spalte 9, Zeile 71; Abbildungen 1-10 * ----- | 1-10 | |
| A,D | US 5 209 116 A (OKUMURA HIROMITU [JP]) 11. Mai 1993 (1993-05-11) * Zusammenfassung * * Spalte 8, Zeile 35 - Spalte 14, Zeile 62; Abbildungen 1-7 * ----- | 1-10 | |
| A,D | US 3 164 995 A (KLAUS FEDERN ET AL) 12. Januar 1965 (1965-01-12) * Spalte 3, Zeile 11 - Spalte 4, Zeile 29; Abbildung 1 * ----- | 1-10 | RECHERCHIERTE SACHGEBIETE (IPC) G01M |
| A | GB 2 029 967 A (REUTLINGER W) 26. März 1980 (1980-03-26) * Zusammenfassung * * Seite 2, Zeile 19 - Seite 3, Zeile 54; Abbildungen 1-9b * ----- | 1-10 | |
| A | FR 2 114 942 A (SCHENCK GMBH CARL) 30. Juni 1972 (1972-06-30) * Seite 5, Zeile 13 - Seite 8, Zeile 24; Abbildungen 1-3 * * Ansprüche 1-10 * ----- -/-- | 1-10 | |

Der vorliegende Recherchenbericht wurde für alle Patentansprüche erstellt

| Recherchenort | Abschlußdatum der Recherche | Prüfer |
|---|---|---|
| München | 20. Dezember 2006 | BERGADO COLINA, J |

EPO FORM 1503 03.82 (P04C03)

Europäisches
Patentamt

**EUROPÄISCHER RECHERCHENBERICHT**

Nummer der Anmeldung

EP 06 01 9334

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 256 790 A2 (VOITH PAPER PATENT GMBH [DE]) 13. November 2002 (2002-11-13) * Zusammenfassung * * Seite 3, Absatz 19 - Seite 4, Absatz 31; Abbildungen 1-3 * ----- | 1-10 | |
| A | US 4 506 133 A (INOUE KIYOSHI [JP]) 19. März 1985 (1985-03-19) * Zusammenfassung * * Spalte 2, Zeile 8 - Spalte 4, Zeile 42; Abbildung 1 * ----- | 1-10 | |
| A | JP 60 071930 A (ANRITSU ELECTRIC CO LTD) 23. April 1985 (1985-04-23) * Zusammenfassung * * Abbildungen 1-4 * ----- | 1-10 | |
| A | JP 61 014537 A (SHIMADZU CORP) 22. Januar 1986 (1986-01-22) * Zusammenfassung; Abbildungen 1,2 * ----- | 1-10 | **RECHERCHIERTE SACHGEBIETE (IPC)** |
| A | EP 0 590 169 A1 (SCHENCK AUTO SERVICE GERAETE [DE] SCHENCK ROTEC GMBH [DE]) 6. April 1994 (1994-04-06) * Zusammenfassung * * Spalte 3, Zeile 56 - Spalte 4, Zeile 42; Abbildung 1 * ----- | 1-10 | |
| A | US 5 046 361 A (SANDSTROM KENNETH A [US]) 10. September 1991 (1991-09-10) * Zusammenfassung * * Spalte 3, Zeile 10 - Spalte 9, Zeile 67; Abbildungen 1-5 * ----- | 1-10 | |
| A | DE 28 27 669 B1 (HOFMANN GMBH & CO KG MASCHINEN) 13. Dezember 1979 (1979-12-13) * Ansprüche 1-5; Abbildungen 1,2 * ----- | 1-10 | |

Der vorliegende Recherchenbericht wurde für alle Patentansprüche erstellt

| Recherchenort | Abschlußdatum der Recherche | Prüfer |
|---|---|---|
| München | 20. Dezember 2006 | BERGADO COLINA, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**EP 1 764 600 A1**

## ANHANG ZUM EUROPÄISCHEN RECHERCHENBERICHT
## ÜBER DIE EUROPÄISCHE PATENTANMELDUNG NR.

EP 06 01 9334

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-12-2006

| Im Recherchenbericht angeführtes Patentdokument | | Datum der Veröffentlichung | Mitglied(er) der Patentfamilie | | Datum der Veröffentlichung |
|---|---|---|---|---|---|
| US 3681967 | A | 08-08-1972 | AU<br>CA<br>DE<br>GB | 4722072 A<br>930978 A1<br>2108488 A1<br>1347565 A | 04-04-1974<br>31-07-1973<br>09-09-1971<br>27-02-1974 |
| US 3122020 | A | 25-02-1964 | AT<br>GB | 245825 B<br>957452 A | 25-03-1966<br>06-05-1964 |
| US 5209116 | A | 11-05-1993 | KEINE | | |
| US 3164995 | A | 12-01-1965 | KEINE | | |
| GB 2029967 | A | 26-03-1980 | DE<br>FR<br>US | 2839819 A1<br>2436379 A1<br>4214481 A | 27-03-1980<br>11-04-1980<br>29-07-1980 |
| FR 2114942 | A | 30-06-1972 | KEINE | | |
| EP 1256790 | A2 | 13-11-2002 | DE<br>US | 10122135 A1<br>2002184946 A1 | 14-11-2002<br>12-12-2002 |
| US 4506133 | A | 19-03-1985 | DE<br>FR<br>GB<br>IT<br>JP | 3244083 A1<br>2517428 A1<br>2111725 A<br>1148682 B<br>58092924 A | 16-06-1983<br>03-06-1983<br>06-07-1983<br>03-12-1986<br>02-06-1983 |
| JP 60071930 | A | 23-04-1985 | KEINE | | |
| JP 61014537 | A | 22-01-1986 | JP<br>JP | 1825608 C<br>5031734 B | 28-02-1994<br>13-05-1993 |
| EP 0590169 | A1 | 06-04-1994 | DE<br>ES<br>US | 59207597 D1<br>2094864 T3<br>5406846 A | 09-01-1997<br>01-02-1997<br>18-04-1995 |
| US 5046361 | A | 10-09-1991 | KEINE | | |
| DE 2827669 | B1 | 13-12-1979 | US | 4310892 A | 12-01-1982 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3164995 A
- US 5209116 A